(19) Europäisches Patentamt
European Patent Office
Office européen des brevets

(11) **EP 4 046 149 B1**

(12) **EUROPÄISCHE PATENTSCHRIFT**

(45) Veröffentlichungstag und Bekanntmachung des Hinweises auf die Patenterteilung:
**29.04.2026   Patentblatt 2026/18**

(21) Anmeldenummer: **20821127.6**

(22) Anmeldetag: **19.11.2020**

(51) Internationale Patentklassifikation (IPC):
**G08G 1/01** *(2006.01)*     **G08G 1/07** *(2006.01)*
**G08G 1/08** *(2006.01)*     **G08G 1/096** *(2006.01)*

(52) Gemeinsame Patentklassifikation (CPC):
**G08G 1/096;** G08G 1/08

(86) Internationale Anmeldenummer:
**PCT/EP2020/082674**

(87) Internationale Veröffentlichungsnummer:
**WO 2021/121849 (24.06.2021 Gazette 2021/25)**

(54) **VERFAHREN ZUM BESTIMMEN MINDESTENS EINES ZU BESTIMMENDEN RESTZEITWERTS FÜR EINE ANLAGE**

METHOD FOR DETERMINING AT LEAST ONE REMAINING TIME VALUE, TO BE DETERMINED, FOR A SYSTEM

PROCÉDÉ POUR DÉTERMINER AU MOINS UNE VALEUR DE TEMPS RESTANT, À DÉTERMINER, POUR UN SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **16.12.2019   DE 102019219748**

(43) Veröffentlichungstag der Anmeldung:
**24.08.2022   Patentblatt 2022/34**

(73) Patentinhaber: **Yunex GmbH**
**81739 München (DE)**

(72) Erfinder:
• **DEPEWEG, Stefan**
**14052 Berlin (DE)**
• **FRANK, Harald**
**85635 Höhenkirchen-Siegertsbrunn (DE)**
• **TOKIC, Michel**
**88069 Tettnang (DE)**
• **UDLUFT, Steffen**
**82223 Eichenau (DE)**
• **WEBER, Marc Christian**
**80339 München (DE)**

(74) Vertreter: **Patentanwaltskanzlei WILHELM & BECK**
**Prinzenstraße 13**
**80639 München (DE)**

(56) Entgegenhaltungen:
**US-A1- 2018 096 595**

• **NATAFGI MOHAMAD BELAL ET AL: "Smart Traffic Light System Using Machine Learning", 2018 IEEE INTERNATIONAL MULTIDISCIPLINARY CONFERENCE ON ENGINEERING TECHNOLOGY (IMCET), IEEE, 14 November 2018 (2018-11-14), pages 1 - 6, XP033493195, DOI: 10.1109/IMCET.2018.8603041**

**Beschreibung**

1. Technisches Gebiet

Die Erfindung betrifft ein Verfahren zum Bestimmen mindestens eines zu bestimmenden Restzeitwerts für eine Anlage. Ferner betrifft die Erfindung eine entsprechende Bestimmungseinheit sowie Computerprogrammprodukt.

2. Stand der Technik

Restwertprognosen sind aus dem Stand der Technik bekannt. Der Restzeitwert bei den Restwertprognosen ist dabei die Zeitdauer bis zum nächsten Umschaltzeitpunkt einer Anlage. Der Restzeitwert kann auch als Restzeit und die Zeitdauer als verbleibende Zeit betrachtet werden. Die Anlage kann ein beliebiges technisches System sein, wie Lichtsignalanlage.

Bei richtiger Restwertprognose kann die Zeitdauer normalerweise bis zu einem Umschaltzeitpunkt eines technischen Systems linear mit fortschreitender Zeit heruntergezählt werden. Der Restzweitwert kann jedoch durch unterschiedliche Faktoren signifikant beeinflusst werden, beispielsweise durch den Verkehrsfluss oder das Verhalten der Verkehrsteilnehmer. Dadurch kann der Restzeitwert signifikant schwanken. Ferner können unvorhergesehene oder unerwartete Ereignisse auftreten.

Exemplarisch sei im Folgenden die Restwertprognose einer Lichtsignalanlage als Anlage betrachtet, bei welcher die Zeitdauer eines in der Zukunft liegenden Umschaltzeitpunktes einer Signalgruppe betrachtet wird. Hinsichtlich der Lichtsignalanlage kann beispielsweise eine ÖPNV-Anmeldung oder ein vom Verkehrsteilnehmer getriggerter Detektor den Restwert maßgeblich beeinflussen.

Der prognostiziere Restzeitwert wird als Entscheidungsgrundlage benutzt, von z.B. dem Lenker eines Fahrzeugs, von einem automatisierten Fahrsystem, einem Routenoptimierung. Daher ist es erforderlich eine zutreffende und verlässliche Prognose der Restzeit bereitzustellen.

Bekannte Ansätze bestehen aus einem statistischen Ansatz, teilweise aus dem Feld des maschinellen Lernens, der anhand von Vergangenheitsdaten eine Prognose der Restzeit oder Grün Wahrscheinlichkeit für die Lichtsignalanlage berechnet. Beispielshafte Vergangenheitsdaten sind Signale von Detektoren, Signalgruppen, ÖV-Telegramme, Kamerasignale oder andere Eingabeelemente. Beispielhafte Detektoren sind Taster für Fußgänger oder Signalstreifen in der Straße.

Nachteilig an den bekannten Ansätzen ist jedoch, dass die situative Unsicherheit der Prognose unzureichend berücksichtigt wird. Die Unsicherheit der Restzeitprognosen gemäß dem Stand der Technik gibt daher keine genaue Auskunft über den Grad der Verlässlichkeit der Restzeitprognose. Der Grad der Verlässlichkeit der Restzeitprognose wird ausgedrückt durch einen Zuverlässigkeitswert. Der Zuverlässigkeitswert kann auch als Verlässlichkeitswert bezeichnet werden und ist ein Maß für den Grad des Vertrauens, den man sinnvollerweise in die Richtigkeit der Schätzung haben kann, wobei 1 "völlig sicher" und 0 "gar nicht sicher" ausdrückt. Wenn ein Konfidenzintervall definiert wird, kann der Zuverlässigkeitswert auch als Konfidenzniveau ausgedrückt werden.

Die Druckschrift US 2018 / 096 595 A1 betrifft ein Verkehrssteuerungssystem.

Die vorliegende Erfindung stellt sich daher die objektive technische Aufgabe ein Verfahren zum Bestimmen mindestens eines zu bestimmenden Restzeitwerts für eine Anlage bereitzustellen, welches zuverlässiger und effizienter ist.

3. Zusammenfassung der Erfindung

Die oben genannte Aufgabe wird erfindungsgemäß durch ein computer-implementiertes Verfahren zum Bestimmen mindestens eines zu bestimmenden Restzeitwerts für eine Anlage gemäß dem Anspruch 1 gelöst, aufweisend die Schritte:

a. Bereitstellen mindestens eines bekannten Eingabedatensatzes mit einer Mehrzahl von Eingabeelementen für mindestens einen bestimmten Zeitpunkt;

b. Bereitstellen mindestens eines zugehörigen bekannten Restzeitwerts für den mindestens einen Eingabedatensatz;

c. Bestimmen des mindestens einen zu bestimmenden Restzeitwerts durch Anwenden einer Fehlerfunktion auf den mindestens einen bekannten Eingabedatensatz und den mindestens einen zugehörigen bekannten Restzeitwert; und

d. Breitstellen eines Ausgabedatensatzes mit dem mindestens einen bestimmten Restzeitwert und einem zugehörigen Zuverlässigkeitswert.

Dementsprechend ist die Erfindung auf ein Verfahren zum Bestimmen mindestens eines zu bestimmenden Restzeitwerts für eine Anlage gerichtet. Der Restzeitwert ist die Zeitdauer bis zum nächsten Umschaltzeitpunkt der Anlage, wie weiter oben im Detail ausgeführt. Der Restzeitwert kann auch als Restzeit und die Dauer als verbleibende Zeit betrachtet werden. Bei einer Lichtsignalanlage wie Ampel als Anlage wird zum Umschaltzeitpunkt die Ampel von einem Betriebszustand in einen anderen Betriebszustand umgeschaltet, beispielsweise wechselt die Ampel von einem grünen Licht in ein rotes Licht. Mit anderen Worten erfolgt der Signalwechsel in diesem Beispiel zum Umschaltzeitpunkt.

In einem ersten Schritt wird der Eingabedatensatz empfangen. Der Eingabedatensatz kann über eine oder mehrere Schnittstellen durch die unten stehende Bestimmungseinheit empfangen werden, wie beliebige Recheneinheit.

Der Eingabedatensatz weist eine Mehrzahl von Eingabeelementen für mindestens einen bestimmten Zeitpunkt auf. Mit anderen Worten wird eine Reihe oder Array mit bekannten Eingabeelementen betrachtet. Bekannt bedeutet in diesem Zusammenhang, dass die Eingabeelemente beispielsweise von Verkehrsteilnehmern aus der Vergangenheit im Verkehr gesammelt oder gewonnen wurden. Daher können die Eingabeelemente auch als Vergangenheitsdatenelemente betrachtet werden. Der Eingabedatensatz mit seinen Eingabe- oder Datenelementen kann dementsprechend auch als Datenvektor bezeichnet werden.

Beispielhafte Eingabeelemente sind Signale von Detektoren, Signalgruppen, ÖV-Telegramme, Kamerasignale, Datum und Uhrzeit. Datum und Uhrzeit können für den bestimmten Zeitpunkt verwendet werden. Für die Eingabeelemente können ganze Zahlen, binäre Zahlen oder andere Zahlen verwendet werden. Ein beispielhafter Eingabedatensatz zu einem bestimmten Zeitpunkt lautet wie folgt:

Wochentag, Stunde, Minute, Sekunde, Zustand der ersten Signalgruppe zum aktuellen Zeitpunkt, .... Zustand der n-ten Signalgruppe zum aktuellen Zeitpunkt, Zustand des ersten Detektors zum aktuellen Zeitpunkt, ... Zustand des m-ten Detektors zum aktuellen Zeitpunkt, ... , Zustand der ersten Signalgruppe vor einer Sekunde, .... Zustand der n-ten Signalgruppe vor einer Sekunde, Zustand des ersten Detektors vor einer Sekunde, ... Zustand des m-ten Detektors vor einer Sekunde, ... , Zustand der ersten Signalgruppe vor l Sekunden, ... , Zustand der n-ten Signalgruppe vor l Sekunden, Zustand des ersten Detektors vor l Sekunden, ..., Zustand des m-ten Detektors vor l Sekunden, wobei n Signalgruppen und m Detektoren betrachtet werden und eine zeitliche Historie bis l Sekunden in die Vergangenheit betrachtet wird. Der Zustand einer jeweiligen Signalgruppe wird beispielsweise als 1 für "frei" und 0 für "gesperrt" kodiert. Der Zustand eines jeweiligen Detektors wird beispielsweise als 1 für "aktiv" und 0 für "inaktiv" kodiert.

Folglich kann es für unterschiedliche Zeitpunkte auch zugehörige unterschiedliche Eingabedatensätze oder Datenvektoren geben. In diesem Fall kann sich für eine Mehrzahl von Eingabedatensätzen zu unterschiedlichen Zeitpunkten eine Datenmatrix als Eingabedatensatz ergeben, welcher in Schritt a. als Eingabe dient.

Für diese bekannten Eingabedatensätze sind die zugehörigen Restzeitwerte bekannt. Der mindestens eine bekannte Restzeitwert für den mindestens einen Eingabedatensatz wird ebenfalls bereitgestellt.

In einem weiteren Schritt wird der zu bestimmende Restzeitwert mit Hilfe einer Fehlerfunktion sowie der zugehörige Zuverlässigkeitswert mithilfe der Fehlerfunktion auf Basis des bekannten Eingabedatensatzes und seiner zugehörigen bekannten Restzeitwert bestimmt. Die Fehlerfunktion ist bevorzugt eine asymmetrische Fehlerfunktion, welche Parameter berücksichtigen kann. Beispielhafte asymmetrische Fehlerfunktionen sind:

$$F(x) = abs(x) * (2 + sgn(x))$$

Oder

$$F(x) = square(x) * exp(x)$$

In einem letzten Schritt wird ein Ausgabedatensatz bereitgestellt. Der Ausgabedatensatz weist den bestimmten Restzeitwert aus Schritt c. und zusätzlich seinen Zuverlässigkeitswert auf. Dabei können eine oder mehrere unterschiedliche Restzeitwerte bereitgestellt werden, wie weiter unten im Detail erläutert. Der Restzeitwert und sein Zuverlässigkeitswert entsprechen dem Standard eines Kommunikationsprotokolls.

Der bestimmte Restzeitwert kann auch als prognostizierter oder geschätzter Restzeitwert bezeichnet werden. Die Bestimmung folglich auch als Prognose oder Schätzung.

Der Zuverlässigkeitswert ist ein Maß für den Grad des Vertrauens, den man sinnvollerweise in die Richtigkeit der Schätzung haben kann, wobei 1 "völlig sicher" und 0 "gar nicht" ausdrückt. Wenn ein Konfidenzintervall definiert wird, kann die Sicherheit auch als Konfidenzniveau ausgedrückt werden.

Im Gegensatz zum Stand der Technik ist die Bestimmung gemäß der Erfindung präziser und es können vorteilhafterweise unterschiedliche Restzeitwerte bereitgestellt werden.

Der Restzeitwert wird oft für eine große Nutzergruppe bzw. große Anzahl an Verkehrsteilnehmern, bsp. Bewohner einer ganzen Stadt, bereitgestellt. Die Kenntnis der Verlässlichkeit der Restzeitwerte, ausgedrückt durch den Zuverlässigkeitswert ist essentiell, um die Sicherheit der Verkehrsteilnehmer und des Verkehrs zu gewährleisten. Weitere Anwendungsfälle bauen auf den bestimmten Restzeitwerten auf, wie Routing sowie Geschwindigkeitsanpassungen, sie weiter unten. Die Verlässlichkeit oder Zuverlässigkeit im Produkt der Signalprognose führt beispielsweise zu einem geringeren Fehlerrisiko für bestimmte Anwendungsfälle, wie Routing.

Je genauer die Restzeit sowie die minimale und die maximale Restzeit sowie die Unsicherheit der Restzeitprognose geschätzt werden können, desto größer wird der mögliche Nutzen im Sinne der Verkehrsoptimierung.

Der Vorteil liegt ferner darin, dass die Bestimmung der zu bestimmenden Restzeit im Gegensatz zum Stand der Technik selbständig oder eigenständig durch die Bestimmungseinheit effizient durchgeführt wird. Dadurch kann Personal sowie Zeit eingespart werden. Weiterhin ist die Bestimmungseinheit vorteilhafterweise weniger fehleranfällig und somit zuverlässiger. Folglich können die Kosten erheblich reduziert werden.

Das erfindungsgemäße Verfahren kann zum Trainieren eines neuronalen Netzes in einer Trainingsphase verwendet werden, in der das neuronale Netz lernt. Nach dem Training kann der erfindungsgemäße Ansatz für das trainierte neuronale Netz verwendet werden, wie folgt:

Ein zu bestimmender Restzeitwert kann durch Anwenden des trainierten neuronalen Netzes auf mindestens einen unbekannten Eingabedatensatz bestimmt werden. Alternativ zu neuronalen Netzen sind andere Ansätze des maschinellen Lernens anwendbar.

In einer Ausgestaltung umfasst der Ausgabedatensatz in Schritt d. einen Median oder einen Mittelwert als Restzeitwert und den zugehörigen Zuverlässigkeitswert des Medians oder des Mittelwerts.

In einer weiteren Ausgestaltung umfasst der Ausgabedatensatz in Schritt d. weiterhin einen minimalen Restzeitwert und/oder einen maximalen Restzeitwert.

Dementsprechend können abhängig des zugrundeliegenden technischen Systems, der Bestimmungseinheit, der Anlage, der Nutzerpräferenzen, anderer Gegebenheiten oder Erfordernissen des Verkehrs die Ausgabedatensätze flexibel gewählt und angepasst werden. Folglich können der Median und sein Zuverlässigkeitswert bereitgestellt werden. Zusätzlich oder alternativ können der minimale und/oder maximale Restzeitwert als Art "Bounds" oder Grenzen anhand des Medians und seines Zuverlässigkeitswerts bereitgestellt werden.

Mit anderen Worten wird zusätzlich zu einer Schätzung des Mittelwertes der Restzeit oder alternativ des Medians der Restzeit auch eine Schätzung von mindestens zwei weiteren Quantilen ermittelt.

In einer weiteren Ausgestaltung ist die Anlage eine Lichtsignalanlage oder sonstige Anlage im Bereich des Verkehrs.

In einer weiteren Ausgestaltung weist das computerimplementierte Verfahren weiterhin den folgenden Schritt auf Durchführen einer Maßnahme, wobei die Maßnahme ausgewählt ist aus der Gruppe bestehend aus:

- Ausgeben des Ausgabedatensatzes und/oder zugehöriger Daten auf einer Anzeigeeinheit,

- Speichern des Ausgabedatensatzes und/oder zugehöriger Daten in einer Speichereinheit, und

- Übermitteln des Ausgabedatensatzes und/oder zugehöriger Daten an eine Recheneinheit.

In einer weiteren Ausgestaltung erfolgt das Durchführen der Maßnahme in Abhängigkeit des mindestens einen zugehörigen Zuverlässigkeitswerts des mindestens einen Restzeitwerts.

Dementsprechend können eine oder mehrere Maßnahmen nach der Bestimmung des zu bestimmenden Restzeitwerts gemäß dem erfindungsgemäßen Verfahren eingeleitet werden. Die Maßnahmen können gleichzeitig, nacheinander oder auch stufenweise durchgeführt werden.

Als erstes kann der Ausgabedatensatz dem Nutzer oder Anwender auf einer Anzeigeeinheit einer Recheneinheit angezeigt werden. Weiterhin kann der Ausgabedatensatz gespeichert werden oder in Form einer entsprechenden Nachricht oder Mitteilung an eine andere Einheit, wie ein Endgerät, eine Steuereinheit oder sonstige Recheneinheit übertragen werden. Die empfangende Recheneinheit kann nach Empfang ebenfalls weitere entsprechende Maßnahmen einleiten. Weitere Maßnahmen sind Routenplanung, Starten eines Motors eines Fahrzeugs oder sonstige Steuerungsmaßnahmen eines Fahrzeugs.

Beispielsweise kann die Recheneinheit eines Fahrzeugs den Ausgabedatensatz empfangen und in Abhängigkeit des Zuverlässigkeitswerts des Medians eine Steuerungsmaßnahme triggern.

Die Erfindung betrifft ferner eine Bestimmungseinheit. Dementsprechend wird das erfindungsgemäße Verfahren durch eine Bestimmungseinheit durchgeführt. Die Bestimmungseinheit ist eine beliebige Recheneinheit. Zusätzlich zur Bestimmung des Ausgabedatensatzes kann die Bestimmungseinheit auch eine oder mehrere der obigen Maßnahmen selbst einleiten. Dadurch werden die Maßnahmen vorteilhafterweise zeitnah sowie effizient ergriffen.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgenden Figuren.

FIG 1     zeigt ein erfindungsgemäßes Ablaufdiagramm des Verfahrens zum Bestimmen mindestens eines zu bestimmenden Restzeitwerts für eine Anlage.

FIG 2     zeigt die Bestimmung eines 5%-Quantils und eines 95%-Quantils gemäß einer Ausführungsform der Erfindung.

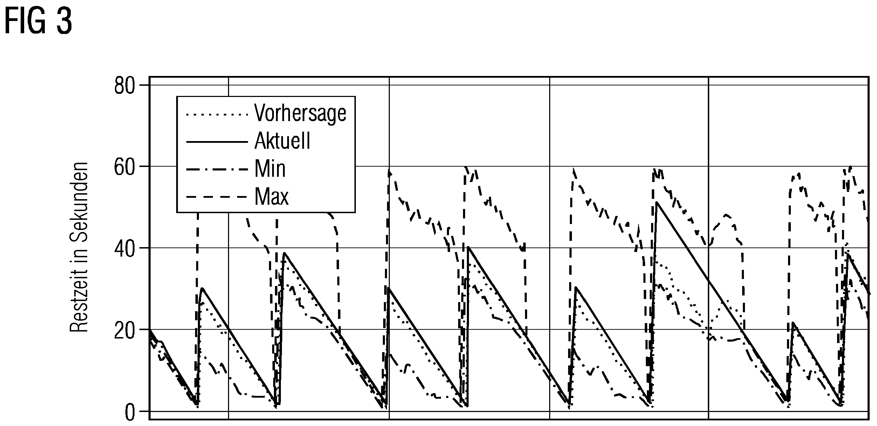

FIG 3     zeigt eine Restzeitprognose gemäß einer Ausführungsform der Erfindung.

### 5. Beschreibung der bevorzugten Ausführungsformen

Im Folgenden werden bevorzugte Ausführungsformen der vorliegenden Erfindung in Bezug auf die Figuren beschrieben.

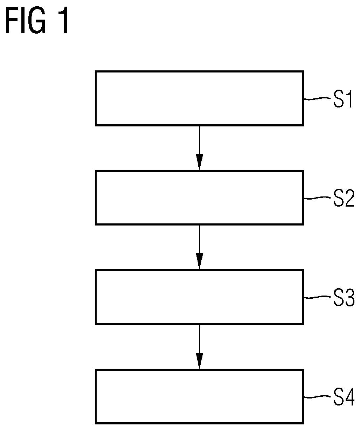

Figur 1 stellt ein Ablaufdiagramm des erfindungsgemäßen Verfahrens mit den Verfahrensschritten S1 bis S4 schematisch dar. Die einzelnen Verfahrensschritte können jeweils durch die Bestimmungseinheit oder auch deren Untereinheiten durchgeführt werden. In den ersten beiden Schritten S1 und S2 werden die Eingabedatensätze empfangen, nämlich der Datenvektor j als bekannter Eingabedatensatz und die Zielgrößen $T\_i,j$ als bekannte Restzeit.

### Quantil Regression S3

Ausgehend von aufgezeichneten Daten, die aus verschiedenen gemessenen und/oder vorberechneten Werten bestehen, von denen einige als Eingabegrößen und andere als Zielgrößen (Target) verwendet werden, kann gemäß einer Ausführungsform ein künstliches neuronales Netz trainiert werden.

Für jeden Datenvektor j des Datensatzes wird durch das künstliche neuronale Netz während der Optimierung der Prognose oder Regression anhand der Eingabegrößen eine oder mehrere Ausgabegrößen $O\_i,j$ berechnet. Für jeden Datenvektor j wird die Differenz zwischen Ausgabegröße $O\_i,j$ und Zielgröße $T\_i,j$ berechnet, wie folgt:

$$\texttt{D\_i,j = O\_i,j - T\_i,j.}$$

Die lokale Fehlerfunktion f bestimmt, wie stark eine jeweilige Differenz $D\_i,j$ den Gesamtfehler, den es zu minimieren gilt, beeinflusst. Die quadratische Fehlerfunktion $f(D\_i,j) = D\_i,j * D\_i,j$ kann verwendet werden, um den Erwartungswert einer Verteilung von Targetwerten zu schätzen. Die Betragsfunktion als Fehlerfunktion $f(D\_i,j) = abs(D\_i,j)$ kann verwendet werden, um den Median einer Verteilung von Targetwerten zu schätzen.

Die asymmetrische Betragsfunktion, als asymmetrische Fehlerfunktion, kann verwendet werden, um verschiedene Quantile zu schätzen. Die asymmetrische Fehlerfunktion kann wie folgt dargestellt werden:

f(D_i,j) = 2 * (Heaviside(-D_i,j) * a * -D_i,j + Heavisi- de(D_i,j) * (1 - a) * D_i,j), wobei a in \[0,1\]

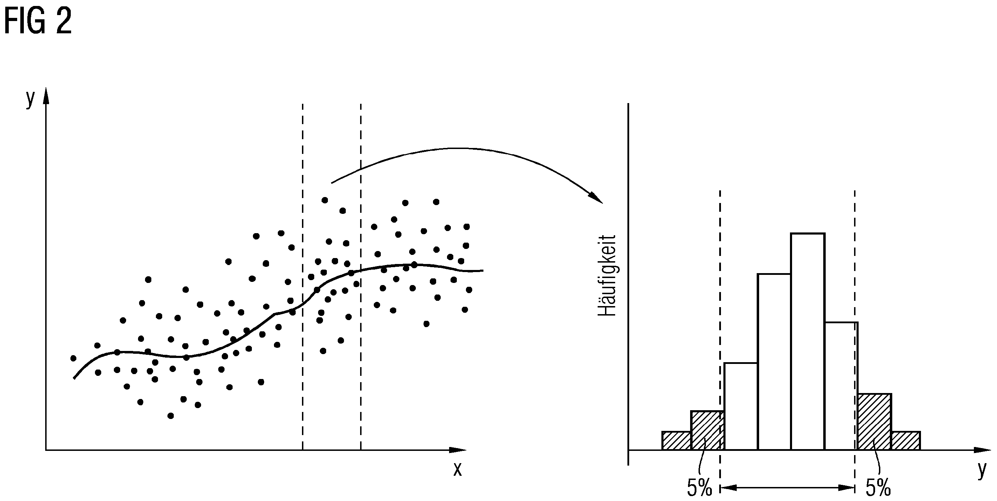

Beispielsweise führt a=0,5 zur Betragsfunktion und damit zur Schätzung des Medians, also des 0,5-Quantils, wie in Figur 2 dargestellt.

Figur 2 illustriert die Schätzung der Quantile. Im linken Teil ist beispielhaft eine abhängige Variable y, die in der Regressionsaufgabe als Zielwert ausgewählt ist, zum Beispiel die Restzeit, gegen eine unabhängige Variable x, zum Beispiel die Zeit dargestellt. Die Punkte symbolisieren die einzelnen Messwerte, die Linie symbolisiert das Ergebnis einer Regression, die den funktionalen Zusammenhang y = g(x) approximiert bzw. schätzt. Aufgrund von unbeobachtbaren Einflüssen und/oder Rauschen können die genauen y-Werte der Datenpunkte durch die Regressionslinie nicht vorhergesagt werden. Jedoch wird in jedem Intervall von x der Mittelwert der y-Werte in diesem Intervall approximiert. Ein solches Intervall wird durch die beiden senkrechten, gestrichelten Linien symbolisiert.

Auf der rechten Seite ist die Verteilung der Abweichung der gemessenen y-Werte von der Regressionskurve als Histogramm dargestellt. Durch die Verwendung der beschriebenen asymmetrischen Fehlerfunktion ist es möglich Regressionskurven zu bestimmen, die nicht den Mittelwert oder den Median abbilden, sondern weitere Quantile, wie zum Beispiel das 5%-Quantil oder das 95%-Quantil.

Mit a=0,01 wird beispielsweise das 0,01-Quantil geschätzt, mit a=0,99 das 0,99-Quantil usw. (nicht dargestellt).

Dementsprechend kann die minimale Restzeit als 0,01-Quantil approximativ geschätzt werden und die maximale Restzeit durch das 0,99-Quantil. Die Unsicherheit U_i,j kann als Interquantilabstand angegeben werden, zum Beispiel wie folgt:

U_i,j = b * ( ( Q_c)_i,j - (Q_d)_i,j) ), wobei b ein Skalierungsfaktor ist, c das höhere Quantil, d das niedrigere Quantil. Zum Beispiel, wie folgt:

```
U_i,j = 1 / 0,675 * ( (Q_0,25)_i,j - (Q_0,75)_i,j)
```

Likelihood Prognose

Alternativ kann ein Modell, wie z. B. ein neuronales Netz, anstatt der Restzeit, gegeben den Kontext x die Parameter einer Gaußverteilung, gegeben durch Erwartungswert (mu) und Varianz (sigma^2) in Abhängigkeit des Kontextes prognostizieren. Aus diesem Ansatz ergibt sich in der Prognose eine heteroskedastische (zustandsabhängige) Gaußverteilung. Aus diesen können dann die oben genannten Quantile berechnet werden. Zum Training kann hierfür die log-likelihood Funktion verwendet werden:

```
mu,sigma^2 = f(x;W)
```

E(W) = -log p(y|x,w) = 0.5 * ln(2*pi*sigma^2) + (mu -y)^2 / (2*sigma^2)

Bayes'sche neuronale Netze

Alternativ kann mithilfe eines Bayes'schen neuronalen Netzwerkes (BNN) die Unsicherheit in der Restzeit mittels Parameterunsicherheit geschätzt werden. Hierzu wird ein BNN trainiert, um die Restzeit zu schätzen. Aus der sich daraus ergebenen Unsicherheit über die Parameter kann empirisch eine Prognoseunsicherheit ermittelt werden, und daraus Quantile, maximale und minimale Schätzungen etc. bestimmt werden.

Im letzten Schritt S4 wird der Ausgabedatensatz bereitgestellt, beispielsweise einem Nutzer ausgegeben oder an eine Recheneinheit übertragen.

Bezugszeichen

S1 bis S4 Verfahrensschritte 1 bis 4

**Patentansprüche**

**1.** Computer-implementiertes Verfahren zum Trainieren eines neuronalen Netzes zum Bestimmen mindestens eines zu bestimmenden Restzeitwerts für eine Anlage in einem Bereich eines Verkehrs, wobei die Anlage eine Lichtsignalanlage ist, wobei der Restzeitwert eine Zeitdauer bis zu einem nächsten Umschaltzeitpunkt der Anlage ist, und wobei zum Umschaltzeitpunkt die Anlage in einen anderen Betriebszustand umgeschaltet wird, aufweisend die Schritte:

    a. Bereitstellen mindestens eines bekannten Eingabedatensatzes mit einer Mehrzahl von Eingabeelementen für mindestens einen bestimmten Zeitpunkt (S1);
    b. Bereitstellen mindestens eines zugehörigen bekannten Restzeitwerts für den mindestens einen Eingabedatensatz (S2);
    c. Bestimmen des mindestens einen zu bestimmenden Restzeitwerts durch Anwenden einer Fehlerfunktion auf den mindestens einen bekannten Eingabedatensatz und den mindestens einen zugehörigen bekannten Restzeitwert (S3); und
d. Breitstellen eines Ausgabedatensatzes mit dem mindestens einen bestimmten Restzeitwert und mindestens einem zugehörigen Zuverlässigkeitswert (S4).

2. Computer-implementiertes Verfahren nach Anspruch 1, wobei der Ausgabedatensatz in Schritt d. einen Median oder Mittelwert als Restzeitwert und den zugehörigen Zuverlässigkeitswert des Medians oder Mittelwerts umfasst.

3. Computer-implementiertes Verfahren nach Anspruch 2, wobei der Ausgabedatensatz in Schritt d. weiterhin einen minimalen Restzeitwert und/oder einen maximalen Restzeitwert umfasst.

4. Computer-implementiertes Verfahren nach einem der vorhergehenden Ansprüche, weiterhin aufweisend den Schritt Durchführen einer Maßnahme, wobei die Maßnahme ausgewählt ist aus der Gruppe bestehend aus:

   - Ausgeben des Ausgabedatensatzes und/oder zugehöriger Daten auf einer Anzeigeeinheit,
   - Speichern des Ausgabedatensatzes und/oder zugehöriger Daten in einer Speichereinheit, und
   - Übermitteln des Ausgabedatensatzes und/oder zugehöriger Daten an eine Recheneinheit.

5. Computer-implementiertes Verfahren nach Anspruch 4, Durchführen der Maßnahme in Abhängigkeit des mindestens einen zugehörigen Zuverlässigkeitswerts des mindestens einen bestimmten Restzeitwerts.

6. Computer-implementiertes Verfahren zum Bestimmen mindestens eines zu bestimmenden Restzeitwerts für eine Anlage durch ein trainiertes neuronales Netz:
Bestimmen eines zu bestimmenden Restzeitwerts durch Anwenden eines neuronalen Netzes auf einen unbekannten Datensatz, wobei das neuronale Netz gemäß dem Verfahren nach einem der voranstehenden Ansprüche 1 bis 5 trainiert ist.

7. Bestimmungseinheit zum Durchführen des computerimplementierten Verfahrens nach einem der vorhergehenden Ansprüche 1 bis 5.

8. Computerprogrammprodukt mit einem Computerprogramm, das Mittel zur Durchführung des Verfahrens nach einem der Ansprüche 1 bis 5 aufweist, wenn das Computerprogramm auf einer programmgesteuerten Einrichtung zur Ausführung gebracht wird.

**Claims**

1. Computer-implemented method for training a neural network for determining at least one remaining time value, to be determined, for an installation in the field of traffic, wherein the installation is a light signal installation, wherein the remaining time value is the duration until the next changeover time of the installation, and wherein, at the changeover time, the installation is changed over to another operating state, comprising the following steps:

   a. providing at least one known input dataset containing a plurality of input elements for at least one particular time (S1);
   b. providing at least one associated known remaining time value for the at least one input dataset (S2);
   c. determining the at least one remaining time value, to be determined, by applying an error function to the at least one known input dataset and the at least one associated known remaining time value (S3); and
   d. providing an output dataset containing the at least one determined remaining time value and at least one associated reliability value (S4).

2. Computer-implemented method according to Claim 1, wherein the output dataset in step d. comprises a median or average value as remaining time value and the associated reliability value of the median or average value.

3. Computer-implemented method according to Claim 2, wherein the output dataset in step d. furthermore comprises a minimum remaining time value and/or a maximum remaining time value.

4. Computer-implemented method according to one of the preceding claims, furthermore comprising the following step: performing a measure, wherein the measure is selected from the group consisting of:

- outputting the output dataset and/or associated data on a display unit,
- storing the output dataset and/or associated data in a storage unit, and
- transmitting the output dataset and/or associated data to a computing unit.

**5.** Computer-implemented method according to Claim 4, comprising performing the measure depending on the at least one associated reliability value of the at least one determined remaining time value.

**6.** Computer-implemented method for determining at least one residual time value, to be determined, for an installation by means of a trained neural network:
determining a residual time value, to be determined, by applying a neural network to an unknown dataset, wherein the neural network is trained in accordance with the method according to one of the preceding Claims 1 to 5.

**7.** Determination unit for performing the computer-implemented method according to one of the preceding Claims 1 to 5.

**8.** Computer program product containing a computer program that has means for performing the method according to one of Claims 1 to 5 when the computer program is executed on a program-controlled apparatus.


**Revendications**

**1.** Procédé mis en œuvre par ordinateur pour entraîner un réseau neuronal afin de déterminer au moins une valeur de temps résiduel à déterminer pour une installation dans une zone d'un trafic, l'installation étant une installation de signalisation lumineuse, la valeur de temps résiduel étant une durée jusqu'à un instant de commutation suivant de l'installation et, à l'instant de commutation, l'installation étant commutée dans un autre état de fonctionnement, comprenant les étapes suivantes :

a. la fourniture d'au moins un ensemble de données d'entrée connu avec une pluralité d'éléments d'entrée pour au moins un instant déterminé (S1) ;
b. la fourniture d'au moins une valeur de temps résiduel connue associée pour l'au moins un ensemble de données d'entrée (S2) ;
c. la détermination de l'au moins une valeur de temps résiduel à déterminer par application d'une fonction d'erreur à l'au moins un ensemble de données d'entrée connues et à l'au moins une valeur de temps résiduel connue associée (S3) ; et
d. la fourniture d'un ensemble de données de sortie avec l'au moins une valeur de temps résiduel déterminée et au moins une valeur de fiabilité associée (S4).

**2.** Procédé mis en œuvre par ordinateur selon la revendication 1, l'ensemble de données de sortie à l'étape d. comprenant une valeur médiane ou moyenne en tant que valeur de temps résiduel et la valeur de fiabilité associée de la valeur médiane ou moyenne.

**3.** Procédé mis en œuvre par ordinateur selon la revendication 2, l'ensemble de données de sortie à l'étape d. comprenant en outre une valeur de temps résiduel minimale et/ou une valeur de temps résiduel maximale.

**4.** Procédé mis en œuvre par ordinateur selon l'une quelconque des revendications précédentes, comprenant en outre l'étape suivante :
la réalisation d'une mesure, la mesure étant choisie dans le groupe constitué par :

- la sortie de l'ensemble de données de sortie et/ou de données associées sur une unité d'affichage,
- le stockage de l'ensemble de données de sortie et/ou de données associées dans une unité de mémoire, et
- la transmission de l'ensemble de données de sortie et/ou de données associées à une unité de calcul.

**5.** Procédé mis en œuvre par ordinateur selon la revendication 4, réalisant la mesure en fonction de l'au moins une valeur de fiabilité associée de l'au moins une valeur de temps résiduel déterminée.

**6.** Procédé mis en œuvre par ordinateur pour déterminer au moins une valeur de temps résiduel à déterminer pour une installation par un réseau neuronal entraîné :
la détermination d'une valeur de temps résiduel à déterminer par application d'un réseau neuronal à un ensemble de données inconnu, le réseau neuronal étant entraîné par le procédé selon l'une quelconque des revendications 1 à 5 précédentes.

7. Unité de détermination pour la réalisation du procédé mis en œuvre par ordinateur selon l'une quelconque des revendications 1 à 5 précédentes.

8. Produit de programme informatique comportant un programme informatique qui présente des moyens pour la réalisation du procédé selon l'une quelconque des revendications 1 à 5 lorsque le programme informatique est exécuté sur un dispositif commandé par programme.

FIG 1

FIG 2

## FIG 3

Restzeit in Sekunden

Vorhersage ·········
Aktuell ———
Min —·—·—
Max — — —

**EP 4 046 149 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2018096595 A1